# DEMANDE DE BREVET EUROPEEN

(11) **EP 1 956 840 A1**
(43) Date de publication de la demande: **13.08.2008**
(21) Numéro de dépôt: 08101443.3
(22) Date de dépôt: 08.02.2008
(51) Int. Cl.: H04N 7/01, B60K 35/00

(54) **Dispositif de traitement d'un flux vidéo entrant prévu pour être affiché sur un écran vidéo d'un véhicule et procédé de traitement mis en oeuvre par un tel dispositif**

(30) Priorité: 12.02.2007 FR 0753203
(71) Demandeur: Peugeot Citroën Automobiles SA, 78140 Vélizy-Villacoublay (FR)
(72) Inventeur: Leman, Cyril Jacques PEUGEOT CITROËN AUTOMOBILES SA, 92190 MEUDON (FR); Bourcier, Frédéric, 92130 ISSY-LES-MOULINEAUX (FR)
(74) Mandataire: Vigand, Régis Louis Michel

(57) **Abrégé**

La présente invention concerne un dispositif de traitement d'un flux vidéo entrant destiné à s'afficher sur un écran vidéo d'un véhicule et procédé de traitement mis en oeuvre par un tel dispositif.

Selon l'invention, le dispositif de traitement comprend : des moyens d'entrée (102) pour le flux vidéo entrant (104), une unité de traitement (110) du flux vidéo entrant (104) et des moyens de sortie (106) pour un flux vidéo (108) sortant, l'unité de traitement (110) comprenant des moyens pour sélectionner un bloc d'au moins deux images (1, 2, 3, 4) dudit flux vidéo entrant (104), des moyens pour sélectionner une image (1) parmi les au moins deux images (1, 2, 3, 4), des moyens pour remplacer la ou chaque image (2, 3, 4) non sélectionnée par ladite image (1) sélectionnée, et des moyens pour générer le flux vidéo sortant (108) à partir de la nouvelle succession d'images (1, 1, 1, 1, 5).

L'invention trouve application dans le domaine de l'automobile.

## Description

La présente invention concerne un dispositif de traitement d'un flux vidéo entrant destiné à s'afficher sur un écran vidéo d'un véhicule ainsi qu'un procédé de traitement mis en oeuvre par un tel dispositif.

Elle se rapporte plus particulièrement à un dispositif de traitement d'un flux vidéo entrant, destiné à s'afficher sur un écran vidéo d'un véhicule, l'écran étant visible par le conducteur.

Un dispositif de traitement d'un flux vidéo entrant de l'état de la technique comprend :
- des moyens d'entrée pour le flux vidéo entrant,
- une unité de traitement du flux vidéo entrant, l'unité de traitement étant prévue pour générer un flux vidéo sortant à partir du flux vidéo entrant, et
- des moyens de sortie pour le flux vidéo sortant.

Le flux vidéo entrant qui parvient aux moyens d'entrée est issu d'une source vidéo numérique ou analogique, comme par exemple, un dispositif d'aide à la conduite ou un dispositif multimédia. Les moyens de sortie sont reliés à l'écran vidéo du véhicule de manière à ce que le flux vidéo sortant s'affiche sur l'écran vidéo. L'unité de traitement traite le flux vidéo entrant de manière à ce que le flux vidéo sortant soit compatible avec l'écran vidéo du véhicule et permette ainsi son affichage. Le traitement peut comporter différentes étapes qui sont dépendantes des caractéristiques de flux vidéo entrant et des caractéristiques du flux vidéo sortant.

Dans un véhicule, la réglementation n'impose aucune limitation particulière pour un écran vidéo visible uniquement par les passagers du véhicule. Par contre, la réglementation impose des limitations pour un écran vidéo visible par le conducteur du véhicule. En effet, l'attention d'un conducteur doit être focalisée sur la conduite du véhicule, mais lorsque des sollicitations extérieures interviennent, le conducteur est attiré par ces sollicitations au risque de provoquer un accident. Lorsque l'écran vidéo est vu par le conducteur, ces sollicitations peuvent être dues au rafraîchissement de l'écran vidéo. Pour éviter que les rafraîchissements perturbent le conducteur, ceux-ci doivent se faire à une fréquence faible de l'ordre de quelques Hertz.

Un flux vidéo du type multimédia a généralement une fréquence d'affichage de 60 Hz. Un tel flux vidéo peut être associé à un flux audio par exemple, du type MP3, et permettre d'afficher l'image de la pochette de l'album écouté, le titre de la chanson écoutée, le temps écoulé depuis le début de la chanson, etc. Un dispositif de traitement de l'état de la technique ne permet pas d'afficher un tel flux vidéo sur un écran visible par le conducteur du fait de la fréquence de rafraîchissement trop grande qui risque de le perturber.

L'invention a pour but de remédier aux inconvénients mentionnés ci-dessus en proposant un dispositif de traitement d'un flux vidéo entrant permettant d'afficher un flux vidéo sortant sur un écran vidéo visible par le conducteur d'un véhicule.

A cet effet, la présente invention concerne un dispositif de traitement d'un flux vidéo entrant constitué d'une succession d'images, le dispositif de traitement comprenant : des moyens d'entrée pour le flux vidéo entrant, une unité de traitement du flux vidéo entrant et des moyens de sortie pour un flux vidéo sortant, l'unité de traitement comprenant des moyens pour sélectionner un bloc d'au moins deux images du flux vidéo entrant, des moyens pour sélectionner une image parmi les au moins deux images, des moyens pour remplacer la ou chaque image non sélectionnée par l'image sélectionnée, et des moyens pour générer le flux vidéo sortant à partir de la nouvelle succession d'images.

Avantageusement, l'image sélectionnée est la première image du bloc.

Avantageusement, le nombre d'images du bloc est tel que la fréquence du flux vidéo sortant est de l'ordre de quelques hertz, et de préférence inférieure à 5 Hz.

L'invention propose également un véhicule comprenant : une source vidéo délivrant un flux vidéo entrant, un dispositif de traitement selon l'une des variantes précédentes, et un écran vidéo, les moyens d'entrée étant connectés à la source vidéo, et les moyens de sortie étant connectés à l'écran vidéo.

L'invention propose également un procédé de traitement d'un flux vidéo entrant constitué d'une succession d'images comprenant : une étape de sélection d'un bloc d'au moins deux images du flux vidéo entrant, une étape de sélection d'une image parmi les au moins deux images, une étape de remplacement de la ou chaque image non sélectionnée par l'image sélectionnée, une étape de génération d'un flux vidéo sortant à partir de la nouvelle succession d'images, et une étape de bouclage sur l'étape de sélection d'un bloc voisin.

Avantageusement, l'image sélectionnée est la première image du bloc.

Avantageusement, le nombre d'images du bloc est tel que la fréquence du flux vidéo sortant est de l'ordre de quelques hertz, et de préférence inférieure à 5 Hz.

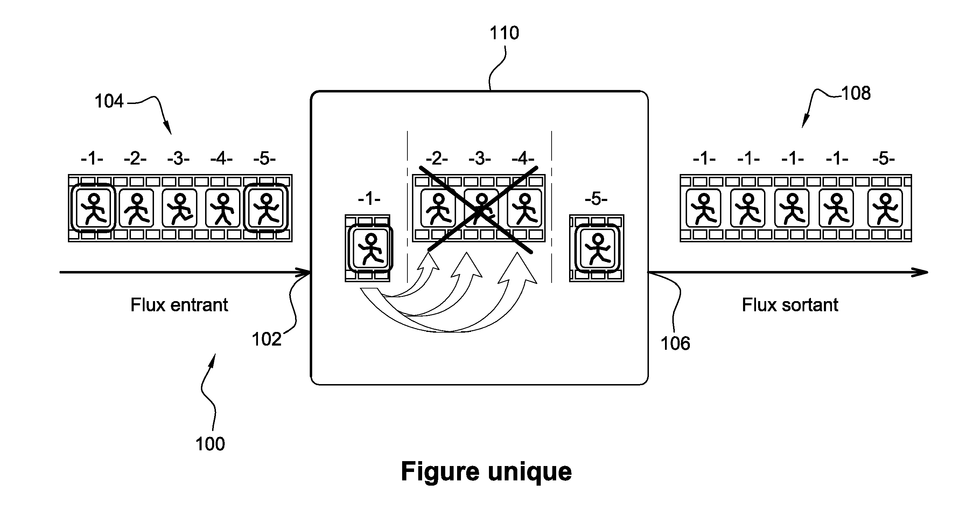

L'invention sera mieux comprise, et d'autres buts, caractéristiques, détails et avantages de celle-ci apparaîtront plus clairement au cours de la description explicative qui va suivre, faite en référence à la figure unique annexée donnée uniquement à titre d'exemple illustrant un mode de réalisation d'un dispositif de traitement selon l'invention.

La figure unique représente un dispositif de traitement 100 d'un flux vidéo entrant 104 constitué d'une succession d'images 1, 2, 3, 4, 5. Le dispositif de traitement 100 comprend : des moyens d'entrée 102 pour le flux vidéo entrant 104, une unité de traitement 110 du flux vidéo entrant 104 et des moyens de sortie 106 pour un flux vidéo sortant 108. Le flux vidéo sortant 108 est destiné à s'afficher sur un écran vidéo d'un véhicule et, en particulier, sur un écran vidéo visible par le conducteur du véhicule. L'unité de traitement 110 comprend des moyens pour sélectionner un bloc d'au moins deux images (ici quatre) 1, 2, 3, 4 du flux vidéo entrant 104, des moyens pour sélectionner une image (ici, l'image référencée 1) parmi les au moins deux images 1, 2, 3, 4, des moyens pour remplacer la ou chaque image 2, 3, 4 non sélectionnée par l'image 1 sélectionnée, et des moyens pour générer le flux vidéo sortant 108 à partir de la nouvelle succession d'images 1, 1, 1, 1, 5. Le dispositif de traitement 100 agit sur chaque bloc consécutif, dans l'exemple de la figure unique et dans le cas d'un bloc de quatre images, le bloc suivant est constitué par l'image 5 et les quatre images suivantes. Les images 1, 2, 3, 4, 5 sont référencées dans l'ordre chronologique d'affichage.

Le véhicule comprend : une source vidéo contenant le flux vidéo entrant 104, le dispositif de traitement 100, et l'écran vidéo, les moyens d'entrée 102 sont connectés à la source vidéo, et les moyens de sortie 106 sont connectés à l'écran vidéo.

Les moyens d'entrée 102 et les moyens de sortie 106 peuvent prendre la forme de connecteurs reliés par l'intermédiaire de câbles respectivement à la source vidéo et à l'écran vidéo.

Les différents moyens qui sont inclus dans l'unité de traitement 110 prennent, de préférence, la forme de composants électroniques.

En sortie du dispositif de traitement 100, le flux vidéo sortant 108 présente une fréquence d'affichage inférieure à celle du flux vidéo entrant 104 ce qui autorise l'affichage du flux vidéo sortant sur l'écran vidéo visible par le conducteur.

Dans le cas d'un flux vidéo associé à un flux audio du type MP3, le dispositif de traitement 100 permet d'afficher l'image de la pochette de l'album écouté, le titre de la chanson écoutée, le temps écoulé sur l'écran visible par le conducteur, même si ces éléments sont animés.

L'image 1 qui est sélectionnée pour remplacer les autres images du bloc peut être n'importe quelle image du bloc, mais, de préférence, l'image sélectionnée 1 est la première image du bloc dans l'ordre chronologique d'affichage. Dans le cas contraire, il est nécessaire de différer l'affichage du bloc d'images pour permettre le remplacement des images qui précédent chronologiquement l'image sélectionnée.

Le nombre d'images 1, 2, 3, 4 du bloc est de préférence tel que la fréquence du flux vidéo sortant 108 est de l'ordre de quelques hertz, et de préférence inférieure à 5 Hz. Par exemple, dans le cas où le flux vidéo entrant 104 a une fréquence de 60 Hz et où le flux vidéo sortant 108 doit avoir une fréquence de 5 Hz, chaque bloc est constitué de 12 images successives.

Un procédé de traitement mis en oeuvre par le dispositif de traitement 100 comprend : une étape de sélection du bloc d'au moins deux images 1, 2, 3, 4 du flux vidéo entrant 104, une étape de sélection d'une image 1 parmi les au moins deux images 1, 2, 3, 4, une étape de remplacement de la ou chaque image 2, 3, 4 non sélectionnée par l'image 1 sélectionnée, une étape de génération du flux vidéo sortant 108 à partir de la nouvelle succession d'images 1, 1, 1, 1, 5, et une étape de bouclage sur l'étape de sélection d'un bloc voisin. Le procédé s'applique successivement à tous les blocs d'images de proche en proche.

## Revendications

1. Dispositif de traitement (100) d'un flux vidéo entrant (104) constitué d'une succession d'images (1, 2, 3, 4, 5), le dispositif de traitement (100) comprenant : des moyens d'entrée (102) pour le flux vidéo entrant (104), une unité de traitement (110) du flux vidéo entrant (104) et des moyens de sortie (106) pour un flux vidéo (108) sortant, l'unité de traitement (110) comprenant des moyens pour sélectionner un bloc d'au moins deux images (1, 2, 3, 4) dudit flux vidéo entrant (104), des moyens pour sélectionner une image (1) parmi les au moins deux images (1, 2, 3, 4), des moyens pour remplacer la ou chaque image (2, 3, 4) non sélectionnée par l'image (1) sélectionnée, et des moyens pour générer le flux vidéo sortant (108) à partir de la nouvelle succession d'images (1, 1, 1, 1, 5).

2. Dispositif de traitement (100) selon la revendication 1, **caractérisé en ce que** l'image sélectionnée (1) est la première image du bloc.

3. Dispositif de traitement (100) selon l'une des revendications 1 ou 2 **caractérisé en ce que** le nombre d'images (1, 2, 3, 4) du bloc est tel que la fréquence du flux vidéo sortant (108) est de l'ordre de quelques hertz, et de préférence inférieure à 5 Hz.

4. Véhicule comprenant : une source vidéo délivrant un flux vidéo entrant (104), un dispositif de traitement (100) selon l'une des revendications 1 à 3, et un écran vidéo, les moyens d'entrée (102) étant connectés à la source vidéo, et les moyens de sortie (106) étant connectés à l'écran vidéo.

5. Procédé de traitement d'un flux vidéo entrant (104) constitué d'une succession d'images (1, 2, 3, 4, 5) comprenant : une étape de sélection d'un bloc d'au moins deux images (1, 2, 3, 4) du flux vidéo entrant (104), une étape de sélection d'une image (1) parmi les au moins deux images (1, 2, 3, 4), une étape de remplacement de la ou chaque image (2, 3, 4) non sélectionnée par l'image (1) sélectionnée, une étape de génération d'un flux vidéo sortant (108) à partir de la nouvelle succession d'images (1, 1, 1, 1, 5), et une étape de bouclage sur l'étape de sélection d'un bloc voisin.

6. Procédé de traitement selon la revendication 5, **caractérisé en ce que** l'image sélectionnée (1) est la première image du bloc.

7. Procédé de traitement selon l'une des revendications 5 ou 6 **caractérisé en ce que** le nombre d'images (1, 2, 3, 4) dudit bloc est tel que la fréquence du flux vidéo sortant (108) est de l'ordre de quelques hertz, et de préférence inférieure à 5 Hz.
